# EUROPÄISCHE PATENTSCHRIFT

(11) **EP 0 365 485 B1**
(45) Veröffentlichungstag und Bekanntmachung des Hinweises auf die Patenterteilung: **28.04.1993**
(21) Anmeldenummer: 89810780.0
(22) Anmeldetag: 12.10.1989
(51) Int. Cl.: B05D 5/08, C09D 127/12, C04B 41/84, C23C 4/10

(54) **Verfahren zum Aufbringen einer Antihaftschicht auf eine Oberfläche eines Gegenstands**
Process for coating the surface of an object with an anti-adhesive layer
Procédé pour appliquer une couche antiadhésive sur une surface d'un article

(30) Priorität: 21.10.1988 CH 3926/88
(43) Veröffentlichungstag der Anmeldung: 25.04.1990
(73) Patentinhaber: HORT-REVETEMENTS SA, CH-3960 Sierre (CH)
(72) Erfinder: Hort, Stefan, CH-3961 Venthône (CH)
(74) Vertreter: Keller, René, Dr.

(56) Entgegenhaltungen:
- DE-A- 3 534 724
- DE-C- 3 644 211

## Beschreibung

Die Erfindung betrifft ein Verfahren zum Aufbringen einer Fluorpolymer-Schicht auf eine Oberfläche eines Gegenstands gemäss dem Oberbegriff des Patentanspruchs 1.

Fluorpolymer-, insbesondere Polytetrafluorethylen-(PTFE-)-Schichten werden auf Metalle aufgebracht, damit diese nicht oder kaum benetzbar sind, keine oder nur geringe Haftung gegenüber den meisten existierenden Materialien, einen niedrigen Reibungskoeffizienten, eine gute Hitzebeständigkeit ohne Verlust der Beschichtungseigenschaften, gute elektrische Eigenschaften und eine hervorragende chemische Resistenz selbst gegen aggressive Chemikalien und Lösungsmittel haben.

Ein Verfahren dieser Art ist aus der US-PS 3 419 414 bekannt. Beim bekannten Verfahren wird der Gegenstand nach dem Sandstrahlen in einem Ofen auf etwa 120 °C (250 °F) erhitzt. Danach wird das keramische Material thermisch aufgesprüht (mittels "flame-spraying").

Nachteilig ist bei dem bekannten Verfahren die mangelhafte Haftung des keramischen Materials auf der Oberfläche des (metallischen) Gegenstands. Gemäss der US-PS 3 419 414 wird deshalb zur Verbesserung der Haftung ("improved bonding") vor dem Aufsprühen des keramischen Materials zunächst eine NiCr-Metallschicht auf die Oberfläche aufgesprüht, worauf der Gegenstand erhitzt, das keramische Material aufgesprüht und das Fluorpolymer aufgetragen und eingebrannt wird.

Wegen der mangelhaften Haftung des keramischen Materials auf der Oberfläche des Gegenstands wurde das, einfache zweischichtige Verfahren verlassen und das aufwendige dreischichtige Verfahren gemäss US-PS 3 419 414 weiterentwickelt. Eine Weiterentwicklung des gattungsmässig anderen, komplizierteren dreischichtigen Verfahrens ist z. B. Gegenstand der DE-PS 36 04 762 (EP-A 206 121).

Eine sechsschichtige Beschichtung einer metallischen Oberfläche, welche einer agressiven Umgebung mit sauren bzw. säurehaltigen oder salzhaltigen Schadstoffen ausgesetzt werden soll, wird in der DE-OS 35 34 724 beschrieben. Als Beschichtung wird eine aluminiumkeramische oder siliziumkeramische Grundschicht als Haftvermittler, welche elektrisch leitfähig gemacht worden ist, verwendet. Uber der Grundschicht befindet sich eine Fluorkunststoff-Grundierung, dann eine Zwischenschicht gefolgt von einer PFA-Antihaft- und Korrosionsschicht, auf der dann eine TFA-Beschichtung liegt. Zur Erzeugung der elektrischen Leitfähigkeit der keramischen Grundschicht, wird diese vor der weiteren Beschichtung durch Sandstrahlen behandelt, um das Aluminium bzw. Silizium der kristallinen Keramikstruktur an der Oberfläche freizulegen. D. h. die Schicht mit der keramischen Grundierung wird durch nachträgliche Bearbeitung in eine Doppelschicht umgewandelt. Die in der DE-OS 35 34 724 beschriebene Beschichtung ist gegenüber derjenigen der DE-PS 36 04 762 als Weiterentwicklung des gattungsgemäßen Verfahrens zu verstehen, in dem durch die Verwendung einer Vielzahl von Schichten, wobei eine der inneren Schichten elektrisch leitfähig gemacht worden ist, die Oberfläche eines metallischen Gegenstandes resistent gegenüber agressiven Umgebungseinflüssen sein soll.

Aufgabe der Erfindung ist es, eine zuverlässige Langzeithaftung des Antihaftbelags mit dem einfachen (zweischichtigen) Beschichtungsverfahren der eingangs genannten Art zu erreichen.

Die erfindungsgemässe Lösung dieser Aufgabe ist Gegenstand des Anspruchs 1.

In den Ansprüchen 2 bis 6 sind bevorzugte Ausführungsarten des erfindungsgemässen Verfahrens angegeben.

Im folgenden wird ein Ausführungsbeispiel der Erfindung näher beschrieben.

Zum Beschichten von Küchengefässen, wie z. B. von Pfannen, Töpfen, Bratpfannen usw., welche z. B. aus Aluminium, rostfreiem Stahl oder Eisen bestehen, wird in einem ersten Arbeitsgang die zu beschichtende Oberfläche, z. B. mit Korundpulver sandgestrahlt. Das Korundpulver hat feine Körner, denen grobe Körner beigemischt sind. Die groben Körner erzeugen auf der zu beschichtenden Oberfläche eine Rauhigkeit von einhundert bis zweihundert Mikrometer. Dieser grob aufgerauhten Oberflächenstuktur wird eine feinere Rauhigkeit durch die feinen Körner von etwa zehn bis dreissig Mikrometer überlagert.

Nach dem Aufrauhen wird das ganze Gefäss in einem Ofen auf etwa 450 °C erhitzt und unmittelbar nach dem Erreichen der Temperatur ein Aluminium- und Titanoxyd-Pulvergemisch mit einer Korngrösse von etwa zehn Mikrometer mittels einer Plasmasprühanlage, als Hartstoffschicht aufgesprüht, wobei die Oberfläche während des ganzen Aufsprühvorgangs auf der hohen Temperatur gehalten bleibt. Aufgrund der hohen Temperatur von über 400 °C, auf der die Oberfläche gehalten wird und der hohen Temperatur, die das Pulvergemisch in der Plasmasprühanlage erhält, wird das Pulvergemisch auf und in die sandgestrahlte Oberfläche eingeschmolzen. Es hat sich gezeigt, dass mit der hohen Temperatur der Oberfläche und deren feinen Rauhigkeit eine ausgezeichnete Langzeithaftung der Aluminium- und Titanoxydschicht, die eine Schichtdicke von fünfzig bis einhundert Mikrometer hat, erreicht wird.

Nach dem Aufsprühen des Pulvergemisches lässt man das Küchengerät auf Raumtemperatur abkühlen, um eine Suspension eines Fluorpolymers, insbesondere PTFE (Polytetrafluorethylen), als Antihaftbelag aufzutragen. Diese Suspension dringt in die Rauhigkeit und Poren der mit dem Pulvergemisch beschichteten Oberfläche ein. Anschliessend wird das Küchengerät mit der aufgetragenen Suspension in einem Ofen in mehreren Stufen (100 °C, 250 °C, 400 °C) auf 400 °C bis 430 °C erhitzt und verbleibt bei der Endtemperatur zehn bis fünfzehn Minuten, um das PTFE einzubrennen.

Die Erweichungstemperatur des Fluorpolymers Polytetrafluorethylens liegt bei 360 °C. Die Temperatur des Küchengeräts ist somit während des Einbrennens eindeutig über dieser Temperatur, so dass die Suspensionspartikel des PTFEs zu einer zähen und elastischen Schicht gesintert werden. Unterhalb der Erweichungstemperatur würde kein Zusammenwachsen der Partikel stattfinden.

Durch das Zusammensintern der Partikel entsteht eine elastische PTFE-Schicht. Die Schicht schmiegt sich mit einer Schichtdicke von ungefähr zehn bis zwanzig Mikrometer an die grobe Rauhigkeit der Oberfläche der Aluminiumoxyd-/Titanoxydschicht an. Das fertige Küchengerät hat somit keine ebene Oberfläche. Aufgrund dieser nichtebenen Oberfläche ist eine stark vergrösserte Oberfläche der PTFE-Schicht entstanden, welche gegenüber thermischer Dilatation äusserst resistent ist und nicht die geringste Neigung zur Rissbildung zeigt, da sie sich wie eine "Ziehharmonika" auseinanderziehen lässt.

Die Schichtdicke von zehn bis zwanzig Mikrometer wurde bewusst derart klein gewählt. Aufgrund der geringen Schichtdicke kommt die Härte der darunterliegenden Aluminium-/Titanoxydschicht besser zur Geltung. Hierdurch sind Schichtverletzungen durch metallische Gegenstände, wie z. B. Messer, Gabel nahezu ausgeschlossen. Sollte bei extremer Kraftanwendung dennoch eine mikroskopisch grosse Schichtverletzung auftreten, so behebt sich diese aufgrund des bekannten Selbstheilungseffektes von PTFE.

Das feine und grobe Sandstrahlen wird wie oben dargelegt durch gemischte feine und grobe Körner in einem Arbeitsgang durchgeführt. Anstelle eines Arbeitsganges kann auch zuerst eine grobe Sandstrahlung und anschliessend eine feine Sandstrahlung vorgenommen werden.

Der durch die Erfindung erzielte Vorteil ist im wesentlichen, wie aus Versuchen und Messungen hervorgegangen ist, darin zu sehen, dass durch das Halten der zu beschichtenden Oberfläche auf mindestens 400 °C während des Aufsprühens des keramischen Materials, unterstützt durch die durch das feinkörnige Sandstrahlen erzeugte feine Rauhigkeit eine sehr gute Haftung der keramischen Schicht erreicht wird und zudem die grobe Rauhigkeit den aufgebrachten Schichten eine Welligkeit gibt, welche Dilatationen der Oberfläche infolge von Erwärmung und Abkühlung des Küchengeräts gut ausgleichen kann und somit einer Rissbildung der Schichten entgegenwirkt.

Da nur eine Oxydschicht (Aluminium-Titanoxydschicht) und eine PTFE-Schicht vorhanden sind, ist eine elektrolytische Reaktion mit dem Grundmaterial, wie bei dreischichtigen Beschichtungen, nicht mehr möglich. Bei der elektrolytischen Reaktion würde das unedlere Material in einer feuchten Umgebung, wie sie bei der Benutzung von Küchengeräten immer gegeben ist, durch statistisch verteilte Löcher in den Schichten, die sich bei der Herstellung nicht vermeiden lassen, herausgelöst. Hierdurch würden mikroskopische Hohlräume unter der Antihaftschicht entstehen, wodurch diese brüchig würde und abfällt.

Durch das Zusammenwachsen der schichtformenden PTFE-Partikel bei der hohen Einbrenntemperatur von über 390 °C ergibt sich eine zähe, elastische Antihaftschicht, welche deutlich über deren Erweichungstemperatur von 360 °C liegt. Die Zähigkeit der Schicht wird signifikant durch die geringe Schichtdicke des PTFE's über der harten Aluminiumoxyd-Titanoxydschicht erhöht.

## Patentansprüche

1. Verfahren zum Aufbringen einer Antihaftschicht, insbesondere einer Fluorpolymer-Schicht, auf eine Oberfläche eines Gegenstands, insbesondere eines Küchengefässes, bei dem die zu beschichtende Oberfläche des Gegenstands aufgerauht, der Gegenstand erhitzt, ein keramisches Material, vorzugsweise ein Aluminiumoxyd-Titanoxyd-Pulvergemisch, unmittelbar auf die aufgerauhte Oberfläche des Gegenstands thermisch aufgesprüht und die Antihaftschicht auf die aufgesprühte Schicht aufgetragen und eingebrannt wird, dadurch gekennzeichnet, dass der Gegenstand vor dem Aufsprühen auf mindestens 400 °C erhitzt und seine zu beschichtende Oberfläche während des Aufsprühens auf mindestens 400 °C gehalten wird.

2. Verfahren nach Anspruch 1, dadurch gekennzeichnet, dass die nach Abkühlen des Gegenstands auf die aufgesprühte, rauhe Schicht aufgetragene Antihaftschicht bei einer Temperatur von über 390 °C, vorzugsweise über 400 °C, eingebrannt wird.

3. Verfahren nach Anspruch 1 oder 2, dadurch gekennzeichnet, dass das keramische Material durch Plasmasprühen aufgesprüht wird.

4. Verfahren nach einem der Ansprüche 1 bis 3, dadurch gekennzeichnet, dass die zu beschichtende Oberfläche des Gegenstands auf eine Rauhtiefe von etwa einhundert bis zweihundert Mikrometer aufgerauht wird.

5. Verfahren nach einem der Ansprüche 1 bis 4, dadurch gekennzeichnet, dass die zu beschichtende Oberfläche des Gegenstands auf eine derartige Rauhtiefe aufgerauht und das keramische Material thermisch so aufgesprüht wird, dass eine Rauhtiefe des keramischen Materials von etwa einhundert bis zweihundert Mikrometer entsteht.

6. Verfahren nach einem der Ansprüche 1 bis 5, dadurch gekennzeichnet, dass die zu beschichtende Oberfläche des Gegenstands durch grobes Sandstrahlen auf eine Rauhigkeit von etwa einhundert bis zweihundert Mikrometer aufgerauht und der grob aufgerauhten Oberflächenstruktur durch feines Sandstrahlen eine feinere Rauhigkeit von etwa zehn bis dreissig Mikrometer überlagert wird.

7. Verfahren nach einem der Ansprüche 1 bis 6, dadurch gekennzeichnet, dass die aufgetragene Antihaftschicht bei einer Temperatur von etwa 400 bis 430 °C während etwa zehn bis fünfzehn Minuten eingebrannt wird.

8. Verfahren nach einem der Ansprüche 1 bis 7, dadurch gekennzeichnet, dass die Temperatur der Oberfläche des Gegenstands während des Aufspritzens des keramischen Materials etwa 450 °C ist.

## Claims

1. Method for applying a non-stick coating, in particular a fluoropolymer coating, to the surface of an object, in particular a kitchen vessel, in which the surface of the object to be coated is roughened, the object is heated, a ceramic material, preferably an aluminium - titanium oxide powder mixture is applied directly to the roughened surface of the object by means of thermal spraying, and the non-stick coating is applied to the sprayed-on coating and is baked, characterised in that the object is heated to at least 400°C before being sprayed and that the surface thereof to be sprayed is maintained at a minimum of 400°C during spraying.

2. Method according to Claim 1, characterised in that the non-stick coating applied to the sprayed, rough coating after the object has been cooled, is baked at a temperature of over 390°C, and preferably over 400°C.

3. Method according to either of Claims 1 or 2, characterised in that the ceramic material is sprayed on by means of plasma spraying.

4. Method according to any one of Claims 1 to 3, characterised in that the surface of the object to be coated is roughened to a depth of approximately one hundred to two hundred microns.

5. Method according to any one of Claims 1 to 4, characterised in that the surface of the object to be coated is roughened to such a depth and the ceramic material is sprayed on thermally such that a roughening depth of one hundred to two hundred microns of the ceramic material is obtained.

6. Method according to any of Claims 1 to 5, characterised in that the surface of the object to be coated is roughened by means of coarse sand-blasting to a roughness of approximately one hundred to two hundred microns and the coarsely roughened surface structure is overlaid by fine sandblasting to a finer degree of roughness of approximately ten to thirty microns.

7. Method according to any one of Claims 1 to 6, characterised in that the non-stick coating applied is baked at a temperature of approximately 400 to 430°C for approximately ten to fifteen minutes.

8. Method according to any one of Claims 1 to 7, characterised in that the temperature of the surface of the object is approximately 450°C while the ceramic material is being sprayed thereonto.

## Revendications

1. Procédé d'application d'une couche anti-adhérence, en particulier une couche en polymère fluoré, sur une surface d'un objet, en particulier un récipient de cuisine, pour lequel la surface à recouvrir de l'objet est rendue rugueuse, l'objet est chauffé, un matériau céramique, de préférence un mélange pulvérulent d'oxyde d'aluminium et d'oxyde de titane est pulvérisé par voie thermique, directement sur la surface rendue rugueuse de l'objet, et la couche anti-adhérence est appliquée sur la couche pulvérisée, puis calcinée, caractérisé en ce que l'objet est chauffé à au moins 400 degrés C avant la pulvérisation et sa surface à recouvrir est maintenue à eu moins 400 degrés C pendant la pulvérisation.

2. Procédé selon la revendication 1, caractérisé en ce que la couche anti-adhérence, appliquée sur la couche pulvérisée, brute, après refroidissement de l'objet, est calcinée à une température supérieure à 390 degrés C, de préférence supérieure à 400 degrés C.

3. Procédé selon la revendication 1 ou 2, caractérisé en ce que le matériau céramique est pulvérisé par pulvérisation au plasma.

4. Procédé selon l'une des revendications 1 à 3, caractérisé en ce que la surface à recouvrir de l'objet est rendue rugueuse, à une profondeur de rugosité d'à peu près cent à deux cent micromètres.

5. Procédé selon l'une des revendications 1 à 4, caractérisé en ce que la surface à recouvrir de l'objet est rendue rugueuse à une profondeur de rugosité telle et le matériau céramique étant pulvérisé par voie thermique de telle façon que qu'est produit une profondeur de rugosité du matériau céramique d'à peu près cent à deux cent micromètres.

6. Procédé selon l'une des revendications 1 à 5, caractérisé en ce que la surface à recouvrir de l'objet est rendue rugueuse par sablage grossier, pour atteindre une rugosité d'à peu près cent à deux cent micromètres et à la structure de surface ainsi rendue rugueuse étant superposée, par un sablage fin, une rugosité plus fine, d'à peu près dix à trente micromètres.

7. Procédé selon l'une des revendications 1 à 6, caractérisé en ce que la couche anti-adhérence appliquée est calcinée à une température d'à peu près 400 à 430 degrés C, pendant à peu près dix à quinze minutes.

8. Procédé selon l'une des revendications 1 à 7, caractérisé en ce que la température de la surface de l'objet pendant la pulvérisation du matériau céramique est d'à peu près 450 degrés C.
